# EUROPEAN PATENT SPECIFICATION

(11) **EP 4 508 489 B1**
(45) Date of publication and mention of the grant of the patent: **04.03.2026**
(21) Application number: 23726452.8
(22) Date of filing: 06.04.2023
(51) Int. Cl.: G02F 1/1516, G02F 1/153, G02F 1/155

(54) **AN ELECTROCHROMIC DISPLAY**
ELEKTROCHROME ANZEIGE
DISPOSITIF D'AFFICHAGE ÉLECTROCHROMIQUE

(30) Priority: 12.04.2022 CZ 20220154
(43) Date of publication of application: 19.02.2025
(73) Proprietor: XGLU LABS a.s., 378 10 Ceske Velenice (CZ)
(72) Inventor: Novak, Marek, 37810 Ceske Velenice (CZ)
(74) Representative: Sedlák, Jirí
(86) International application number: PCT/CZ2023/050018
(87) International publication number: WO 2023/198232

(56) References cited:
- JP-A- 2003 315 842
- JP-A- 2007 041 259
- US-A1- 2005 040 048

## Description

### Field of the Invention

The invention relates to the field of electroactive materials, specifically an electrochromic display.

### Background of the Invention

The field of electrochromic displays and the use of electrochromic substances has been studied for several decades; despite that, these displays have not been widely used and in most cases have been replaced by liquid-crystal displays, OLED displays or so-called "e-ink" displays. The field of possible applications of electrochromic displays has narrowed down to only very specific applications, e.g. electronic dimming of windows in commercial aircraft or rear-view mirrors in cars.

Commercially available electrochromic displays intended for printed electronics are produced on plastic foils by printing conductive layers or by etching conductive layers. While this lowers the cost of production of the display itself, it brings problems and additional costs of connection of electronic components to the display, either by means of anisotropic conductive adhesives or by gluing the components directly to the plate. One of the reasons for the need to use this technology is the formulation of the electrolyte itself, which usually relies on a toxic non-reactive filler in the form of an organic solvent in which the appropriate salt, particularly lithium perchlorate, is dissolved to form the electrolyte.

The electrochromic display according to document CN 103 123 431 consists of two planar ITO layers so-called indium-tin oxide layers, where on one side is an organic electrochromic material and on the other side is an inorganic electrochromic material, with an ionic liquid between them that is not modified in any way. A similar solution is described in CN 104 130 769, where the electrochromic material is dissolved in electrolyte. Such a solution is also described in document JP 2009/192985. The disadvantage of such an electrochromic display is that it can only be used for binary displays, or as an electronically dimmable window.

Another type of electrochromic display is described in document CN 109 634 021 A, which describes an electrolyte formed of choline chloride or lithium bis(trifluoromethanesulfonyl)imide so-called LiTFSI, dissolved in ethylene glycol, which are solids. The disadvantage of LiTFSI is its toxicity and high cost, which prevent wider commercial use.

In other embodiments of electrolyte preparation for electrochromic displays, monomers and oligomers are added to the ionic liquid, which, in combination with the effect of UV radiation, increase the viscosity of the electrolyte after its printing, as described in patent applications US 2014/0361211 and CN 111 624 828. The disadvantage is that the combination of these substances creates an electrolyte that shows signs of toxicity.

Furthermore, electrochromic displays face disadvantages such as high cost, reduction of conductivity due to non-integrity and non-uniformity of the electrolyte, impossibility of biodegradation to the aforementioned toxicity of the electrolyte due to the use of perchlorate and lithium salts, solvents, monomers and photoinitiators. The presence of perchlorate and other salts can also cause problems from the point of view of air transport, where there are significant restrictions on the transport of oxidizing agents.

Document JP 2011/164256 describes the construction of a binary display with a porous layer of a narrow list of materials with a thickness between 1 and 5 µm, which is placed on a highly reflective common electrode. This layer is created by vacuum sputtering. The electrochromically active material is not present on this electrode, it is present on a second, completely transparent electrode, which is placed above the common electrode. A layer of electrolyte is between these two electrodes. The disadvantage is that such an arrangement does not provide a biodegradable and cost-effective electrochromic display, and its electrolyte, as well as other components, are not non-corrosive and non-toxic.

Document JP 2008/026605 describes the construction of an electrochromic display where a transparent conductive layer such as ITO is sputtered on a plate, forming one electrode, on which a porous layer is formed by sintering of TiO₂ at high temperature. The opposite electrode is made in the same way, except that tin oxide is used. Nanoparticles with a diameter of 30 nm are used for the construction. The disadvantage is that the electrochromic materials used are simple unpolymerized viologens, which are characterized by toxicity. US 2005/040048 A1 discloses an electropolymerization method for preparing a nanotube-type conducting polymer using a porous template and a method for preparing an electrochomic device using electrochromism of the conducting polymer.

The disadvantage for the commercial use of electrochromic displays still remains the very low compatibility of technologies used for printed electronics, primarily screen printing of conductive inks, and techniques used for the production of conventional electronics - PCB etching process. Electrical components can be mounted on a conventional fibreglass printed circuit board by soldering at temperatures up to 300°C or by bonding. If it was possible to place an electrochromic display on such a plate in addition to electronics and, for example, sensors, it would bring significant cost savings. Due to the content of non-reactive filler and other substances with corrosive effects, it is usually necessary during production to disguise the areas of the display that are in contact with the conductive paths, as well as the lead wires, applied by screen printing, the binder of which is etched by organic solvents and the display is thus damaged by means of a spacer or by printing a dielectric layer. The use of solvents also places high demands on the adhesives used. Another problem with currently used displays is the placement of the electrolyte, which must be placed between two plates separated by spacers that prevent the electrolyte from being pushed out of the electrode surface.

The object of the invention is therefore to create such an electrochromic display, which would be a preferable combination of materials that are both electrochromic and mechanically functional, and thus it would not be necessary to create a rigid layer for the electrolyte. Another object of the invention is to create such an electrochromic display that would be biodegradable, cost-effective, and its electrolyte and other components would be non-corrosive and non-toxic, while being based on a high-contrast, conductive plate. At the same time, there would be no need to disguise the areas of the electrochromic display that would be in contact with the conductive paths, spacer or dielectric layer printing. Another object of the invention is to create such an electrochromic display, of which the electrolyte does not need to contain spacers to prevent the electrolyte from being pushed out of the electrode surface.

### Summary of the Invention

The object is achieved by an electrochromic display according to the present invention, which includes a plate and at least two electrodes of electrochromic material arranged on the plate. It further includes an electrolyte that is arranged on a plate and is in contact with the electrodes and contains an ionic liquid. The electrochromic display further includes at least two lead wires that are arranged on the plate and connected to the electrode. It is the subject matter of the invention that the lead wire arranged so that at least part of its surface is in conductive contact with the electrolyte, while the lead wire is formed as a layer of carbon particles or a continuous layer of copper on the plate. At least one electrode is formed by a porous layer made up of mutually cross-linked pigment particles arranged in a polymer matrix selected from at least one doped conjugated polymer selected from the group of polyfluorene, polycarbazole, polybenzothiadiazole, polythiophene, metallopolymer or their derivatives. At the same time, all the functional layers of the display can be produced by low-temperature processes up to 100°C, which significantly reduces the price and increases production throughput. The mass ratio of pigment particles and doped conjugated polymer is at least 5:1. Furthermore, at least some electrodes are not conductively connected to each other. The thickness of the porous layer is greater than 5 µm. This porous layer is preferably opaque and the pigment particles have a contrast colour to the colour of the conjugated doped polymer so as to form a richly coloured (usually white) layer against which the electrochromic material layer changes colour. The advantage of the porous layer is that the electrolyte can soak into it, so there is no danger of all the electrolyte being pushed out of the electrode area, which is a problem with most electrochromic displays today.

The term "opaque" for purposes of the description of this invention is defined so that the transmittance of the layer for light of wavelength between 400 and 700 nm is less than 40%.

The term "contrast" for the purposes of the description of this invention is defined so that the difference between the colour of two objects that are determined to be contrast can be discerned with the naked eye under illumination of 50 lux and above.

The term "porous" for the purposes of the description of this invention is defined in such a way that the given layer in its structure contains small gaps through which a suitable solvent is able to pass at least to a part of the layer. At the same time, the solvent is chosen so that it does not degrade the given layer, e.g. by dissolution or chemical reaction, or any of the components of the layer in a short time frame.

The term "conductive" in connection with a material is the purposes of the description of this invention defined as a material that has a conductivity greater than 1×10⁻⁶ S/m. If the term "conductive" is used in connection with a layer, then it is a layer made of a material or a mixture of materials that have a conductivity higher than 1×10⁻⁶ S/m in a structure identical to that of the layer.

The term "conjugated polymer" for the purposes of this invention is defined as a polymer in which single and double bonds regularly alternate within its macromolecule backbone. The term "doped" for the purposes of the description of this invention is defined in such a way that one or more compounds (dopants) are added to the polymer, which increase its conductivity and/or improve the dispersion properties of the polymer in the solvent.

The term "cross-linking of particles" for purposes of the description of this invention is defined using one or more of the following methods: forming the ink by dispersing the polymer into a suspension in a suitable solvent followed by mixing with the pigment particles, or by dissolving the polymer in a suitable solvent and mixing with the pigment particles and printing with the subsequent evaporation of the solvent, or by applying the pigment particles and their cross-linking by spraying or printing on the surface of the pigment particles with the subsequent evaporation of the solvent/solvents in which the polymer was present.

In a preferred embodiment, the pigment particles are non-conductive. The advantage of using non-conductive particles is their significantly lower price compared to conductive particles with light colours, which must be used in the construction of the display; these are specialized products. Furthermore, most types of these conductive particles are toxic due to antimony content. By using a suitable doped conjugated polymer, the conductivity can be increased to such an extent that the conductivity of the pigment particles is not required.

In another preferred embodiment, an adhesive polymer intermediate matrix based on urethane, acrylate, epoxy, kapton or polysiloxane is placed at least on part of the surface of the plate. This adhesive polymer intermediate matrix is non-conductive. The adhesive polymer intermediate matrix is preferably located with part of its surface under the porous layer of the electrode and is primarily involved in improving the adhesion of the porous layer to the plate.

By adding a suitable colour pigment, a shade identical to or close to one of the colour states of the display electrodes can be achieved, thereby increasing the contrast without the need to print another colour layer, for example on the cover layer of the display. This layer can also be used to limit the contact area of lead wires in the event that the lead wires cannot be provided with a surface layer and, from a long-term perspective, there would be a risk of their degradation or the formation of oxide. Another advantage of the polymer intermediate matrix is the increase of adhesion between the plate, or between the lead wire and the electrode, and the prevention of electrode detachment over time.

In another preferred embodiment, the polymer matrix is further supplemented with at least one non-conjugated polymer selected from the group of polyethylene oxide, polyvinyl butyral, nylon, polyvinyl alcohol, polyvinyl chloride, polyacetate, polyacetal, polypropylene, polyethylene, polycarbonate, polymethyl methacrylate, polyacrylate, or their derivatives or a combination of polymers and their derivatives. Such cross-linking increases mechanical resistance.

In a preferred embodiment, the electrolyte contains an ionic liquid and a non-reactive filler, with the cation of the ionic liquid selected from the group: imidazole derivative cation, pyridine derivative cation, phosphine derivative cation, pyrrolidone derivative cation, quaternary ammonium cation or choline. The non-reactive filler consists of alcohol, polyether, acetate and/or combination thereof. The addition of a non-reactive filler enables significant savings in production costs, as the price of ionic liquids is usually very high. The use of these groups of non-reactive fillers preserves the ionic conductivity of the resulting electrolyte due to their chemical composition. Such a composition of the ionic liquid further enables the contact action of the electrolyte directly on conductive paths, such as electrodes and lead wires, without the need for masking them with a spacer film or by printing a dielectric layer.

In another preferred embodiment, the electrolyte is an eutectic solvent, which is an eutectic mixture of at least one Lewis or Brønsted acid and at least one Lewis or Brønsted base. The advantage is a lower price and simpler synthesis compared to ionic liquids. An example of such a deep eutectic solvent is a mixture of glycerol and choline chloride.

In another preferred embodiment, the electrolyte further contains at least 0.5 wt% of rheological modifier based on silica, cellulose, cellulose derivative and/or their mixture. The rheological modifier prevents the formation of air bubbles and creates a stable gel that ensures better conductivity and faster exchange of cations as well as uniform surface of electrolyte.

In a preferred embodiment, the lead wire is provided with a surface layer which is based on a metal from the group of nickel, palladium, iridium, tin, gold and/or combination thereof. Covering the wires with a layer of metal is a cheaper alternative to making lead wires from individual metals, and the surface layer also provides protection against undesired reactions on the conductive path, thus increasing its resistance.

In a preferred embodiment, the plate is made of a material from the group of PET film, PE film, polyimide film or fibreglass.

In a preferred embodiment, the electrolyte contains a dye that is contrast to the colour of the electrode to increase the contrast of the coloured data. In a preferred embodiment, the electrolyte is further enriched with a surfactant to increase wettability, which is preferably selected from the group of Triton X-100, Tween 20, Tween 50, Brij 93, Brij S 100 in a concentration from 0.01 wt% to 5 wt%. The addition of surfactant reduces the surface tension of the electrolyte and prevents the formation of bounded drops on some materials with low surface energy, such as untreated PET or some electrochromic layers based on hexylthiophene, when the electrolyte is not in contact with the entire surface of the electrodes, which leads to malfunctions of the display.

The advantage of the electrochromic display according to the present invention is mainly that the electrochromic display is formed by a preferable combination of materials that have electrochromic and at the same time mechanically functional properties, while it is not necessary to create a rigid layer for the electrolyte. Another advantage of the electrochromic display according to the present invention is that it is biodegradable, cost-effective, and its electrolyte and other components are non-corrosive and non-toxic, while being based on a high-contrast, conductive plate without the need for masking the areas of the electrochromic display that are in contact with the conductive paths with a spacer or dielectric layer printing. Another advantage of the electrochromic display according to the present invention is that the electrolyte does not need to contain spacers to prevent the electrolyte from being pushed out of the electrode surface.

### Explanation of drawings

The present invention will be explained in detail by means of the following figures where:

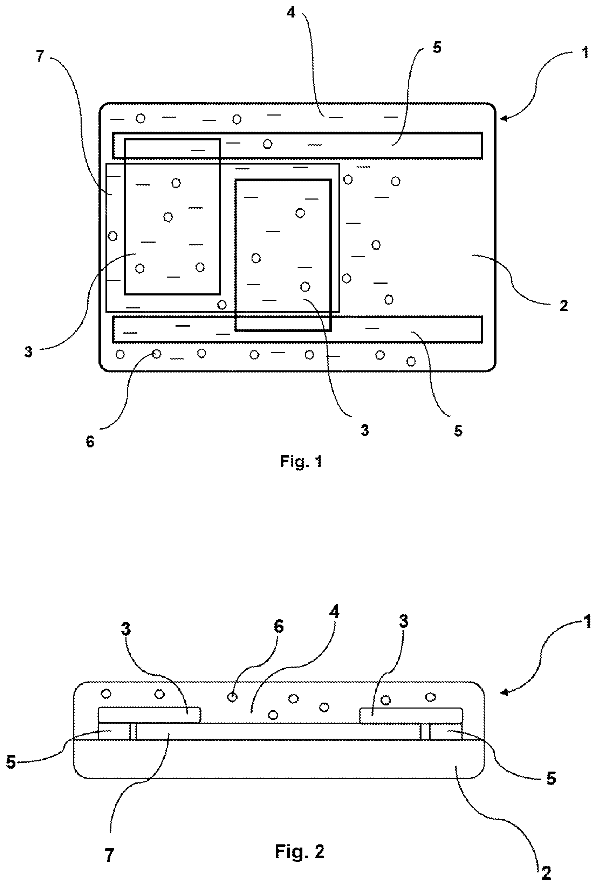

Fig. 1 shows a perspective view of an electrochromic display,
Fig. 2 shows a cross-section of an electrochromic display.

### Examples of the invention embodiments

### Example 1: Preparation of electrolyte with rheological modifier - silica

In a 2 L container, 350 g of the hexafluorophosphate salt of an imidazole derivative, namely 1-ethyl-3-methylimidazole (EMIM-PF6) were mixed together with 600 g of polyethylene glycol 300 (PEG 300) using a magnetic stirrer while gradually increasing the temperature to 70°C. In another non-illustrated example of the invention embodiment, the imidazole derivative used was selected from the group: 1-allyl-3-methylimidazole, 1-benzyl-3-methylimidazole, 1-butyl-3-methylimidazole, 1-pentyl-3-methylimidazole, 1-hexyl-3-methylimidazole, 1-heptyl-3-methylimidazole, 3-methyl-1-(N-butyl-N-methylcarbamoylmethyl)-imidazole, 1,3-diethoxyimidazole. In another non-illustrated example of the invention embodiment, a pyridine derivative, a phosphine derivative, a pyrrolidone derivative, a quaternary ammonium cation, or a choline was used as the cation of the ionic liquid. After stirring for 60 minutes, the container was transferred to a shaft stirrer and stirred with a propeller stirrer with a diameter of 8 cm and speed of 1000 rpm for another 15 minutes under constant heating. Then, 50 g of fumed silica forming a rheology modifier was added, and the mixture was further stirred at 80°C for 2 hours. The resulting mixture had a gel consistency after cooling to room temperature and the colour of electrolyte 4 was clear.

### Example 2: Preparation of electrolyte with rheological modifier - hydroxyethyl cellulose

In a 2 L container, 600 g of the tetrafluoroborate salt of the imidazole derivative, 1-butyl-3-methylimidazole (BMIM-BF4) were mixed together with 370 g of diethylene glycol (DEG) using a magnetic stirrer while gradually increasing the temperature to 110°C. In another non-illustrated example of the invention embodiment, the imidazole derivative used was selected from the group: 1-allyl-3-methylimidazole, 1-benzyl-3-methylimidazole, 1-ethyl-3-methylimidazole, 1-pentyl-3-methylimidazole, 1-hexyl-3-methylimidazole, 1-heptyl-3-methylimidazole, 3-methyl-1-(N-butyl-N-methylcarbamoylmethyl)-imidazole, 1,3-diethoxyimidazole. In another non-illustrated example of the invention embodiment, a pyridine derivative, a phosphine derivative, a pyrrolidone derivative, a quaternary ammonium cation, or a choline was used as the cation of the ionic liquid. After stirring for 60 minutes, the container was transferred to a shaft stirrer and stirred with a propeller stirrer with a diameter of 8 cm and speed of 1000 rpm for another 15 minutes under constant heating. Then, 30 g of hydroxyethyl cellulose forming a rheology modifier was added, and the mixture was further stirred at 110°C for 6 hours. In another non-illustrated example of the invention embodiment, a cellulose derivative, namely hydroxymethylcellulose and/or cellulose, was used as a rheological modifier. The resulting mixture was viscous in consistency and the colour of electrolyte 4 was orange to brown.

### Example 3: Preparation of biodegradable electrolyte with rheological modifier

In a 2 L container, 250 g of 3-methyl-1-(N-butyl-N-methylcarbamoylmethyl)-imidazole bromide salt (NMe"BuBr) were mixed together with 650 g of glycerol using a magnetic stirrer while gradually increasing the temperature to 110°C. In another non-illustrated example of the invention embodiment, the imidazole derivative used was selected from the group: 1-allyl-3-methylimidazole, 1-benzyl-3-methylimidazole, 1-ethyl-3-methylimidazole, 1-pentyl-3-methylimidazole, 1-hexyl-3-methylimidazole, 1-heptyl-3-methylimidazole, 1-butyl-3-methylimidazole, 1,3-diethoxyimidazole. In another non-illustrated example of the invention embodiment, a pyridine derivative, a phosphine derivative, a pyrrolidone derivative, a quaternary ammonium cation, or a choline was used as the cation of the ionic liquid. After stirring for 60 minutes, the container was transferred to a shaft stirrer and stirred with a propeller stirrer with a diameter of 8 cm and speed of 1000 rpm for another 15 minutes under constant heating. Then, 50 g of fumed silica forming a rheology modifier was added, and the mixture was further stirred at 110 °C for 3 hours. In another non-illustrated example of the invention embodiment, the rheology modifier was a mixture of silica and cellulose and/or a cellulose derivative. The resulting mixture had a gel consistency and the colour of electrolyte 4 was yellowish.

### Example 4: Electrolyte properties depending on concentration and choice of rheological modifier

For electrolyte 4 with the ratio of ionic liquid and alcohol as shown in example 1, i.e. 350 g of the hexafluorophosphate salt of 1-ethyl-3-methylimidazole (EMIM-PF₆) together with 600 g of polyethylene glycol 300 (PEG 300), the mass ratio of fumed silica forming rheological modifier was changed and the viscosity of the resulting electrolyte 4 was measured at 20°C. The results are shown in Table 1.

**Table 1: Results of electrolyte viscosity measurement depending on the concentration of fumed silica as a rheological modifier.**

| Mass ratio of fumed silica | Viscosity [mPa.s] |
|---|---|
| 0 | 120 |
| 2 | 68,400 |
| 4 | 136,000 |
| 6 | 199,900 |
| 8 | 274,000 |
| 10 | 320,000 |
| 15 | 513,000 |
| 20 | > 650,000 |

### Example 5: Binary "on-off" electrochromic display with two electrodes without using a porous structure on PET film

In the first step, two PEDOT:PSS electrodes 3 were printed on a plate 2 made of PET film with a thickness of 0.25 mm by a dispersion of 1.3% PEDOT:PSS in water containing 4% dimethyl sulfoxide and 0.2% Triton X-100, while the thickness of wet layer was 25 µm. The resulting PEDOT:PSS electrodes 3 were 10 × 10 mm in size with a 1 mm gap between them. This gap ensured that the electrodes 3 were not in conductive contact. In the next step, lead wires 5 with a length of 30 mm were printed with a carbon-containing ink (Creative Materials 112-48), which overlapped the plates in the previous step with a surface area of 1 mm². Subsequently, 0.2 ml of electrolyte 4 prepared according to the procedure described in Example 1 was applied to the surface of the electrodes 3, covering the entire surface area of both PEDOT:PSS electrodes 3. Subsequently, voltage of 2 V was applied to the two carbon lead wires 5 in places where they were not in contact with the electrolyte 4. In this case, a colour change could be observed where one of the electrodes 3 became dark blue, while the other electrode 3 was light blue. When the polarity of the supplied voltage was reversed, the colours of both electrodes 3 were also swapped.

### Example 6: Electrolyte properties depending on concentration of ionic liquid

Six prototypes of binary "on-off" electrochromic display 1 according to Example 5 with the components of the electrolyte 4 according to Example 1 were constructed. For individual prototypes, the concentration of individual components of electrolyte 4 differed according to Table 2.

**Table 2: Concentration of individual electrolyte components in individual prototypes.**

| Electrolyte number | Ionic liquid [%] | Alcohol [%] | Fumed silica [%] |
|---|---|---|---|
| 1 | 95 | 0 | 5 |
| 2 | 75 | 20 | 5 |
| 3 | 55 | 40 | 5 |
| 4 | 35 | 60 | 5 |
| 5 | 15 | 80 | 5 |
| 6 | 5 | 90 | 5 |

Subsequently, voltage of +/- 3 V was applied to the electrodes 3 and the time during which the segment of the electrochromic display 1 was redrawn from light to dark colour and vice versa was read from the video recording. Both times corresponded to the time it took to reach 10 and 90% of full contrast of the electrochromic display 1. These times were summed and listed in Table 3.

**Table 3: Colour change cycle time of individual electrochromic display prototypes.**

| Electrolyte number | Cycle time [sec] |
|---|---|
| 1 | 1.0 |
| 2 | 1.4 |
| 3 | 2.1 |
| 4 | 3.2 |
| 5 | 5.5 |
| 6 | 15.5 |

### Example 7: Display implemented on a fibreglass plate with copper surface treatment

The electrochromic display 1 was prepared as follows. The plate 2 of the electrochromic display 1 according to the present invention was fibreglass, namely FR-4 material with a thickness of 0.6 mm. The lead wires 5 were applied with a layer of copper with a thickness of 20 µm on the plate 2, and the excess was subsequently etched away with a 10% solution of ferric chloride (FeCl₃) in water so as to create mutually insulated lead wires 5, identical in shape to Example 5. The procedure was further identical to the procedure in Example 5, except that the electrodes 3 were applied to the surface of the lead wires 5 and not under them, while the copper paths forming the lead wires 5 were covered with a surface layer in the first case with a 5 µm layer of tin, in the second case with a 10 µm layer of nickel and subsequently a 0.8 µm layer of gold. In another non-illustrated example of the invention embodiment, the lead wires 5 were covered with a surface layer consisting of a combination of tin, nickel and/or gold. In another non-illustrated example of the invention embodiment, the lead wires 5 were covered with a surface layer from the group of palladium, iridium and/or combination thereof. At the same time, the surface area of the lead wires 5 was identical to the surface area of the electrodes 3. In both cases, a significant increase in the contrast of the electrochromic display 1 was observed due to the fact that both the silver surface of tin and the gold surface of gold were more contrasted to the dark blue colour of the electrochromic polymer compared to copper or the white plate 2 of PET film.

### Example 8: Adding a dye to the electrolyte to increase contrast

For the electrochromic display 1 from Example 5, 0.5 wt% of ferric chloride (FeCl₃) was added to the electrolyte 4 to change the colour of electrolyte 4 from clear to yellow, thereby suppressing wavelengths that were not absorbed by the PEDOT:PSS electrochromic substance. Photographs of electrochromic displays 1 were digitally processed in both colour states under constant mercury-vapour lamp and constant camera settings. For both colour states, the luminance L1, L2 was calculated and then the contrast was calculated using the formula (L1+0.05) / (L2+0.05). The latter was 3.43 for electrochromic display 1 with electrolyte 4 without added dye, while for electrochromic display 1 with added dye it was 4.23, i.e. a significant improvement in optical readability.

### Example 9: Measurement of electrolyte stability

The stability of electrolyte 4 prepared according to Example 1 was measured by heating it to 150°C for 8 hours. Subsequently, changes in electrolyte 4 consistency, colour change and weight loss were monitored. A weight loss of up to 2% was observed, which could be attributed to the loss of residual water in electrolyte 4, with no change in the colour of electrolyte 4. The consistency and viscosity of electrolyte 4 did not change.

Furthermore, the electrochromic display 1 of Example 5 with the electrolyte 4 of Example 1 was tested for long-term stability. Sample of the electrochromic display 1 was kept at room temperature and an average relative humidity of 60% for half a year. After this period of time, the contrast of electrochromic display 1 decreased by 5 wt%. The electrochromic display 1 according to this embodiment was therefore suitable for long-term applications.

### Example 10: Measurement of electrolyte biodegradability

The biodegradability test of electrolyte 4 was performed on electrolyte 4 of Example 3 using a method in accordance with OECD 301D or "Closed bottle test". Electrolyte 4 was added to an aqueous medium with microorganisms and the depletion of dissolved oxygen in the aqueous medium was monitored while the containers were kept at a constant temperature of 20°C for 28 days. At the end of the test, the biodegradation of electrolyte 4 was in the range of 30-35 wt%.

### Example 11: Electrolyte with spacers

As shown in Example 5, two electrochromic displays 1 were constructed, while spacers 6 in the form of glass beads with a diameter of 100 µm and a mass fraction of 10% were added to the electrolyte 4 of one of the electrochromic displays 1. Subsequently, a plate 2 made of PE film with a thickness of 100 µm was placed on both electrochromic displays 1. Then, a prism with a contact area of 1 cm² was pushed with a force of 20 N into the centre of both electrochromic displays 1. In the case of the electrochromic display 1 without the spacers 6, the electrolyte 4 was pushed to the sides, while this phenomenon was not observed for the electrolyte 4 with the spacers 6 added.

### Example 12: Electrolyte with surfactant

Two electrolytes 4 were prepared according to Example 1, when 0.5 wt% of Tween 20 surfactant was added to one of them. For both electrolytes 4, their contact angle was measured at a temperature of 60°C on a plate 2 made of polyimide film not treated with corona discharge: A contact angle of 52° was measured for electrolyte 4 without surfactant, while a contact angle of 31° was measured for electrolyte 4 with surfactant, which represented a significant increase in the wettability of electrolyte 4, which was crucial for its uniform application to electrodes 3.

### Example 13: Creating an electrode using a porous layer on the lead wire

The electrochromic display 1 was prepared as follows. The plate 2 of the electrochromic display 1 according to the present invention was fibreglass, namely FR-4 material with a thickness of 0.6 mm. The lead wires 5 were applied with a layer of copper with a thickness of 20 µm on the plate 2, and the excess was subsequently etched away with a 10% solution of ferric chloride (FeCl₃) in water so as to create mutually insulated lead wires 5, identical in shape to Example 5. The procedure was further identical to the procedure in Example 5, except that the electrodes 3 were applied to the surface of the lead wires 5 and not under them, while the copper paths forming the lead wires 5 were covered with a surface layer in the first case with a 5 µm layer of tin and the electrodes 3 were not formed from the PEDOT:PSS material. These were replaced by a porous layer. The ink for the fabrication of the porous layer was prepared by mixing 5 ml of dimethylformamide, 2 g of zinc oxide and 0.1 g of PEDOT:PSS, followed by sonication at 50 W for 15 minutes. In another non-illustrated example of the invention embodiment, the PEDOT:PSS material in the porous layer was replaced by a doped conjugated polymer from the group of polyfluorene, polycarbazole, polybenzothiadiazole, metallopolymer and their derivatives. This mixture was then applied at a thickness of 50 µm to the copper paths forming the lead wires 5 and the solvent was evaporated at a temperature of 100°C. It was ensured that the two porous layers were not conductively connected to each other. Electrolyte 4 was then applied to the surface of the porous layer. When alternating current was applied between the porous layers, the colour changed from light blue to dark blue and vice versa.

### Example 14: Porosity testing of a porous layer on the lead wire

The electrochromic display 1 was prepared as shown in Example 13 without the presence of electrolyte 4. On the edge of one of the 10 x 10 mm electrodes 3 in the form of a porous layer formed by a doped conjugated polymer based on polyfluorene, a drop of electrolyte 4 with a volume of 0.1 ml as shown in Example 4 was applied with 0 wt% content of rheological modifier. In another non-illustrated example of the invention embodiment, the electrode 3 in the form of a porous layer was formed by a polymer from the group of polythiophene, polycarbazole, polybenzothiadiazole, metallopolymer and their derivatives. After two hours, it was visually observed that electrolyte 4 had soaked into the entire volume of 10 x 10 mm of the electrode 3 in the form of a porous layer. This proved the formation of a porous structure from which electrolyte 4 could not be mechanically pushed out.

### Example 15: Testing electrolyte permeation through a porous layer

The electrochromic display 1 was prepared as shown in Example 13 without the presence of electrolyte 4. Electrolyte 4 was replaced by a 10% solution of potassium chloride in water with an admixture of 5% fumed silica as a rheological modifier. This electrolyte 4 was placed on both electrodes 3 in a thickness of 1 mm, and an alternating current with a frequency of 1 Hz and an amplitude of 4 V was applied. After one hour, the peeling of the porous structure due to the corrosive action of the copper lead wires 5 was observed. This experiment proved that the porous structure created in this way does not perfectly insulate the copper lead wires 5 before the entry of the electrolyte 4.

### Example 16: Preparation of an electrochromic display with a porous layer cross-linked by two polymers

The electrochromic display 1 was prepared according to Example 13 with ink modification to produce a porous layer, adding 0.075 g of polyvinyl butyral in addition to PEDOT:PSS. After the production of electrochromic display 1, the abrasion resistance of the porous layer was tested with a blunt plastic tip with a tip radius of 0.5 mm. In electrochromic display 1 shown in Example 13 without polyvinyl butyral, the porous layer was wiped off at a pressure of 0.5 N, in electrochromic display 1 shown in this Example, the porous layer was wiped off at a pressure of 2.3 N. Thus, there was a multiple improvement in the resistance of the porous layer against the action of mechanical force.

### Example 17: Preparation of an electrochromic display with an electrolyte in the form of a deep eutectic solvent

The electrochromic display 1 was prepared according to Example 13, where the electrolyte 4 was replaced by a mixture of glycerol and choline chloride in a ratio of 2:1 by weight, resulting in a deep eutectic solvent. Based on the measurements, electrolyte 4 had comparable electrochemical properties to electrolyte 4 based on non-reactive filler and ionic liquid.

### Example 18: Preparation of an electrochromic display with an adhesive polymer interlayer

The electrochromic display 1 was prepared as shown in Example 13, where a 20 µm thick layer of LOCTITE Hysol 9492 clear epoxy resin dyed with 0.1% methylene blue was applied to the plate 2 after etching of the lead electrodes 3 to achieve a resin colour similar to that of the electrodes 3, which were in this example of the embodiment produced identically to Example 13. This layer formed the adhesive polymer intermediate matrix 7. This polymer intermediate matrix 7 was printed on the entire surface of the plate 2, except for the contacts on its edge and the surface where the lead wires 5 and electrodes 3 made conductive contact. Based on mechanical tests, this adhesive polymer intermediate matrix 7 improved the adhesion of the porous layer to the plate 2 and at the same time improved the readability of the electrochromic display 1, highlighting the currently active electrode 3, which was darker. In another non-illustrated example of the invention embodiment, the adhesive polymer intermediate matrix 7 was formed on the basis of urethane, acrylate, kapton or polysiloxane.

### Example 19: Determination of the limit of the ratio of conjugated polymer and pigment particles to maintain porosity

To determine the limit at which the porous layer formed by the pigment particles and the conjugated polymer was still porous, a series of experiments was carried out, where the ink formed by the dispersion of PEDOT and titanium dioxide TiO₂ in water at the concentrations determined in Table 4 was printed on plate 2 of PET film in a layer with a thickness of 50 µm and 30 x 30 mm in size. A drop of water with a volume of 100 µl was then placed in the centre. The diameter of the drop was 3 mm at the beginning of the experiment. The stability of the porous layer and the surface area of the water-soaked area per 1 hour were observed. This was then converted to the corresponding diameter if the soaked surface area were circular. Based on these data, a limit was established when the porous layer was still porous and when it was already continuous.

**Table 4: Concentration of individual electrolyte 4 components in individual prototypes.**

| Experiment number | TiO₂ ratio: PEDOT | Calculated average |
|---|---|---|
| 1 | 50: 1 | Disintegration of layer |
| 2 | 25: 1 | Soaked in the entire area |
| 3 | 20: 1 | Soaked in the entire area |
| 4 | 15: 1 | 24 mm |
| 5 | 10: 1 | 19 mm |
| 6 | 8: 1 | 16 mm |
| 7 | 7: 1 | 14 mm |
| 8 | 6: 1 | 9 mm |
| 9 | 5: 1 | 5 mm |
| 10 | 4: 1 | 3.5 mm |
| 11 | 3: 1 | 3.5 mm |

The measured results showed that at ratios of 4:1 and below, the given porous layer was only minimally porous and showed the properties of a continuous layer.

### Example 20: Effect of second non-conjugated polymer on porosity

The porous electrode printing ink was made by mixing 10 g of propan-2-ol, 5 g of titanium dioxide, and 1 g of a mixture of conjugated PEDOT polymer and non-conjugated polyvinyl butyral polymer. The resulting weight ratio of PEDOT and polyvinyl butyral in the solution was 1:2 by weight. The aim of the experiment was to demonstrate that the presence of the conjugated PEDOT polymer was essential for the porosity of the given structure. Subsequently, the experiment of Example 20 was repeated. After 1 hour, the calculated diameter to which the water had soaked was 12 mm. Thus, it was obvious that the structure retained its porous properties despite the addition of another polymer, at a concentration multiple times higher than the conjugated polymer. After the application of the porous layer and evaporation of the solvent, a higher grain size of the surface was visually observed, which was caused by the separation of both polymers and the creation of a porous structure. Thus, it was obvious that the involvement of the conjugated polymer was completely essential and crucial for the porosity. A theoretical explanation could be the superhydrophilicity of conjugated polymers and their intolerance to hydrophobic polymers, which leads to the formation of grains that give rise to a porous structure. In another non-illustrated example of the invention embodiment, the non-conjugated polymer was replaced by a polymer from the group of polyethylene oxide, polyvinyl butyral, nylon, polyvinyl alcohol, polyvinyl chloride, polyacetate, polyacetal, polypropylene, polyethylene, polycarbonate, polymethyl methacrylate, polyacrylate, or their derivatives. In another non-illustrated example of the invention embodiment, the initial ink was made with only a mixture of solvent, pigment and non-conjugated polymer, followed by the application of a dispersion or solution of the conjugated polymer by spraying or printing, creating a porous layer.

The electrochromic display 1 according to examples of the embodiment of this invention is formed by a preferred combination of materials that are both electrochromic and mechanically functional, and therefore there is no need for creating a rigid layer for the electrolyte 4. Furthermore, the electrochromic display 1 according to this invention is biodegradable, cost-effective, and its electrolyte 4 and other components are non-corrosive and non-toxic, while it is based on a high-contrast, conductive plate. At the same time, there is no need for masking the areas of the electrochromic display 1 that are in contact with the conductive paths. Furthermore, the electrochromic display 1 prepared in this way does not need to contain spacers 6 to prevent the electrolyte 4 from being pushed out of the surface of the electrodes 3.

### Industrial applicability

The electrochromic display according to this invention can be commercially used in the mass production of electrochromic displays, for many application areas, in particular for biosensors with numerical output.

### List of index reference numerals

- 1: electrochromic display
- 2: plate
- 3: electrode
- 4: electrolyte
- 5: lead wire
- 6: spacer
- 7: polymer intermediate matrix

## Claims

1. An electrochromic display (1) comprising a plate (2), at least two electrodes (3) arranged on the plate (2), an electrolyte (4) which is arranged on the plate (2) and in contact with at least two electrodes (3), at least two lead wires (5) arranged on the plate (2) connected to at least one electrode (3), wherein at least some electrodes (3) are not conductively connected to each other, **characterized in that** the lead wire (5) is arranged so that at least part of its surface is in conductive contact with the electrolyte (4), the lead wire (5) is formed as a layer of carbon particles on the plate (2) or a continuous layer of copper on the plate (2), at least one electrode (3) is formed by a porous layer formed by mutually cross-linked pigment particles arranged in a polymer matrix selected from at least one doped conjugated polymer selected from the group of polyfluorene, polycarbazole, polybenzothiadiazole, polythiophene, metallopolymer or their derivatives, while the mass ratio of pigment particles and doped conjugated polymer is at least 5:1, and the thickness of the porous layer is greater than 5 µm, while the porous layer is opaque and the pigment particles have a contrast colour to the colour of the conjugated doped polymer.

2. The electrochromic display (1) according to claim 1, **characterized in that** the pigment particles are non-conductive.

3. The electrochromic display (1) according to claim 1 or 2, **characterized in that** on at least part of the surface of the plate (2) is placed an adhesive polymer intermediate matrix (7) based on urethane, acrylate, epoxy, kapton or polysiloxane, which partly overlaps at least one lead wire (5).

4. The electrochromic display (1) according to claim 3, **characterized in that** the adhesive polymer intermediate matrix (7) is arranged with at least part of its surface under the porous layer of the electrode (3).

5. The electrochromic display (1) according to any of claims 1 to 4, **characterized in that** the polymer matrix is further supplemented with at least one non-conjugated polymer selected from the group of polyethylene oxide, polyvinyl butyral, nylon, polyvinyl alcohol, polyvinyl chloride, polyacetate, polyacetal, polypropylene, polyethylene, polycarbonate, polymethyl methacrylate, polyacrylate, or their derivatives.

6. The electrochromic display (1) according to any of claims 1 to 5, **characterized in that** the electrolyte (4) contains an ionic liquid and a non-reactive filler, while the cation of the ionic liquid is selected from the group: imidazole derivative cation, pyridine derivative cation, phosphine derivative cation, pyrrolidone derivative cation, quaternary ammonium cation or choline, and the non-reactive filler is composed of the alcohol, polyether, acetate and/or a combination thereof.

7. The electrochromic display (1) according to any of claims 1 to 5, **characterized in that** the electrolyte (4) contains at least one Lewis or Brønsted acid and at least one Lewis or Bronsted base.

8. The electrochromic display (1) according to any of claims 1 to 7, **characterized in that** the electrolyte (4) contains at least 0.5 wt% of rheological modifier based on silica and/or cellulose derivative and/or cellulose and/or their mixture.

9. The electrochromic display (1) according to any of claims 1 to 8, **characterized in that** the lead wire (5) is provided with a surface layer to increase the resistance of the lead wire (5), which is based on a metal from the group: nickel, palladium, iridium, tin, gold and/or combinations thereof.

10. The electrochromic display (1) according to any of claims 1 to 9, **characterized in that** the plate (2) is made of a material from the group of PET film, PE film, polyimide or fibreglass.

11. The electrochromic display (1) according to any of claims 1 to 10, **characterized in that** the electrolyte (4) further contains a dye contrast in colour to the colour of the electrode (3) to increase the contrast.

12. The electrochromic display (1) according to any of claims 1 to 11, **characterized in that** the electrolyte (4) further contains a surfactant to increase wettability.

## Patentansprüche

1. Ein elektrochromes Display (1) umfassend eine Unterlage (2), mindestens zwei auf der Unterlage (2) angeordnete Elektroden (3), einen auf der Unterlage (2) angeordneten und mit den mindestens zwei Elektroden (3) in Kontakt stehenden Elektrolyten (4) sowie mindestens zwei auf der Unterlage (2) angeordnete Zuleitungsleiter (5), die mindestens an eine Elektrode (3) angeschlossen sind, wobei mindestens einige der Elektroden (3) nicht leitend miteinander verbunden sind, **dadurch gekennzeichnet, dass** der Zuleitungsleiter (5) so angeordnet ist, dass mindestens ein Teil seiner Oberfläche in leitfähigem Kontakt mit dem Elektrolyten (4) steht, wobei der Zuleitungsleiter (5) als eine Schicht aus Kohlenstoffpartikeln auf einer Unterlage (2) oder als eine durchgehende Kupferschicht auf einer Unterlage (2) ausgebildet ist, mindestens eine Elektrode (3) wird durch eine poröse Schicht gebildet, die aus miteinander vernetzten Pigmentpartikeln besteht, die in einer Polymermatrix angeordnet sind, die aus mindestens einem dotierten konjugierten Polymer ausgewählt ist, das aus der Gruppe von Polyfluoren, Polycarbazol, Polybenzothiadiazol, Polythiophen, Metallpolymer oder deren Derivate ausgewählt ist, wobei das Gewichtsverhältnis von Pigmentpartikeln zu dotiertem konjugiertem Polymer mindestens 5:1 beträgt und die Dicke der porösen Schicht größer als 5 µm ist, wobei die poröse Schicht undurchsichtig ist und die Pigmentpartikeln eine kontrastierende Farbe zur Farbe des konjugierten dotierten Polymers aufweisen.

2. Ein elektrochromes Display (1) nach dem Anspruch 1, **dadurch gekennzeichnet, dass** die Pigmentpartikeln elektrisch nichtleitend sind.

3. Ein elektrochromes Display (1) nach dem Anspruch 1 oder 2, **dadurch gekennzeichnet, dass** eine Adhäsions-Polymer-Zwischenmatrix (7) auf Basis von Urethan, Acrylat, Epoxidharz, Kapton oder Polysiloxan auf mindestens einem Teil der Oberfläche der Unterlage (2) aufgebracht ist, die mindestens einen Zuleitungsleiter (5) teilweise bedeckt.

4. Ein elektrochromes Display (1) nach dem Anspruch 3, **dadurch gekennzeichnet, dass** die Adhäsions-Polymer-Zwischenmatrix (7) mit einem Teil ihrer Oberfläche unter der porösen Schicht der Elektrode (3) platziert ist.

5. Ein elektrochromes Display (1) nach einem der Ansprüche 1 bis 4, **dadurch gekennzeichnet, dass** die Polymermatrix zusätzlich mit mindestens einem nichtkonjugierten Polymer, ausgewählt aus der Gruppe von Polyethylenoxid, Polyvinylbutyral, Nylon, Polyvinylalkohol, Polyvinylchlorid, Polyacetat, Polyacetal, Polypropylen, Polyethylen, Polycarbonat, Polymethylmethacrylat, Polyacrylat oder deren Derivaten, ergänzt wird.

6. Ein elektrochromes Display (1) nach einem der Ansprüche 1 bis 5, **dadurch gekennzeichnet, dass** der Elektrolyt (4) eine ionische Flüssigkeit und einen nicht reaktiven Füllstoff enthält, wobei das Kation der ionischen Flüssigkeit aus dieser Gruppe ausgewählt ist: ein Imidazolderivat-Kation, ein Pyridinderivat-Kation, ein Phosphinderivat-Kation, ein Pyrrolidonderivat-Kation, ein quaternäres Ammonium-Kation oder Cholin, und der nicht reaktive Füllstoff aus einem Alkohol, einem Polyether, einem Acetat und/oder deren Kombinationen besteht.

7. Ein elektrochromes Display (1) nach einem der Ansprüche 1 bis 5, **dadurch gekennzeichnet, dass** der Elektrolyt (4) mindestens eine Lewis- oder Brønsted-Säure und mindestens eine Lewis- oder Brønsted-Base enthält.

8. Ein elektrochromes Display (1) nach einem der Ansprüche 1 bis 7, **dadurch gekennzeichnet, dass** der Elektrolyt (4) mindestens 0,5 Gew.-% eines rheologischen Modifikators auf Basis von Siliciumdioxid und/oder einem Cellulosederivat und/oder Cellulose und/oder deren Mischung enthält.

9. Ein elektrochromes Display (1) nach einem der Ansprüche 1 bis 8, **dadurch gekennzeichnet, dass** der Zuleitungsleiter (5) mit einer Oberflächenschicht zwecks der Erhöhung der Beständigkeit des Zuleitungsleiters (5) versehen ist, die auf einem Metall aus der Gruppe Nickel, Palladium, Iridium, Zinn, Gold und/oder deren Kombination basiert.

10. Ein elektrochromes Display (1) nach einem der Ansprüche 1 bis 9, **dadurch gekennzeichnet, dass** die Unterlage (2) aus einem Material aus der Gruppe PET-Folie, PE-Folie, Polyimid oder Glasfaser besteht.

11. Ein elektrochromes Display (1) nach einem der Ansprüche 1 bis 10, **dadurch gekennzeichnet, dass** der Elektrolyt (4) außerdem einen Farbstoff enthält, dessen Farbe sich von der Farbe der Elektrode (3) abhebt, um den Kontrast zu erhöhen.

12. Ein elektrochromes Display (1) nach einem der Ansprüche 1 bis 11, **dadurch gekennzeichnet, dass** der Elektrolyt (4) ferner ein Tensid zwecks der Erhöhung der Benetzbarkeit enthält.

## Revendications

1. Afficheur électrochromique (1) comprenant un support (2), au moins deux électrodes (3) disposées sur le support (2), un électrolyte (4) disposé sur le support (2) et en contact avec au moins deux électrodes (3), au moins deux conducteurs d'alimentation (5) disposés sur le support (2) et reliés à au moins une électrode (3), au sens que certaines électrodes (3) ne sont pas reliées électriquement entre elles, **caractérisé en ce que** le conducteur d'alimentation (5) est disposé de manière à être, sur au moins une partie de sa surface, en contact électriquement conducteur avec l'électrolyte (4), tandis que le conducteur d'alimentation (5) étant réalisé sous la forme d'une couche de particules carbonées sur le support (2) ou d'une couche continue de cuivre sur le support (2), au moins une électrode (3) étant constituée d'une couche poreuse formée de particules pigmentaires réticulées entre elles et disposées dans une matrice polymère choisie parmi au moins un polymère conjugué dopé sélectionné dans le groupe comprenant polyfluorène, polycarbazole, polybenzothiadiazole, polythiophène, métallopolymère ou leurs dérivés, le rapport massique entre les particules pigmentaires et le polymère conjugué dopé étant d'au moins 5 : 1, et l'épaisseur de la couche poreuse étant supérieure à 5 µm, la couche poreuse étant opaque, et les particules pigmentaires présentant une couleur contrastée par rapport à la couleur du polymère conjugué dopé.

2. Afficheur électrochromique (1) selon la revendication 1, **caractérisé en ce que** les particules pigmentaires sont non conductrices.

3. Afficheur électrochromique (1) selon la revendication 1 ou 2, **caractérisé en ce qu'**au moins une partie de la surface du support (2) est recouverte d'une matrice polymère adhésive intermédiaire (7) à base d'uréthane, d'acrylate, d'époxy, de kapton ou de polysiloxane, qui recouvre partiellement au moins un conducteur d'alimentation (5).

4. Afficheur électrochromique (1) selon la revendication 3, **caractérisé en ce qu'**une partie de la surface de ladite matrice polymère adhésive intermédiaire (7) est placée sous la couche poreuse de l'électrode (3).

5. Afficheur électrochromique (1) selon l'une des revendications 1 à 4, **caractérisé en ce que** la matrice polymère est en outre complétée par au moins un polymère non conjugué sélectionné dans le groupe constitué des : oxyde de polyéthylène, polyvinylbutyral, nylon, alcool polyvinylique, chlorure de polyvinyle, polyacétate, polyacétal, polypropylène, polyéthylène, polycarbonate, polyméthacrylate de méthyle, polyacrylate, ou leurs dérivés.

6. Afficheur électrochromique (1) selon l'une des revendications 1 à 5, **caractérisé en ce que** l'électrolyte (4) comprend un liquide ionique et une charge inerte, le cation dudit liquide ionique étant sélectionné dans le groupe constitué des : cation dérivé de l'imidazole, cation dérivé de la pyridine, cation dérivé de la phosphine, cation dérivé de la pyrrolidone, cation d'ammonium quaternaire ou de la choline, et la charge inerte étant constituée d'un alcool, d'un polyéther, d'un acétate et/ou d'une combinaison de ceux-ci.

7. Afficheur électrochromique (1) selon l'une des revendications 1 à 5, **caractérisé en ce que** l'électrolyte (4) comprend au moins un acide de Lewis ou de Brønsted et au moins une base de Lewis ou de Brønsted.

8. Afficheur électrochromique (1) selon l'une des revendications 1 à 7, **caractérisé en ce que** l'électrolyte (4) comprend au moins 0,5 % en poids d'un modificateur de rhéologie à base de silice et/ou d'un dérivé de cellulose et/ou de cellulose et/ou d'un mélange de ceux-ci.

9. Afficheur électrochromique (1) selon l'une des revendications 1 à 8, **caractérisé en ce que** le conducteur d'alimentation (5) est muni d'une couche de surface destinée à augmenter la résistance dudit conducteur d'alimentation (5), ladite couche de surface étant à base d'un métal sélectionné dans le groupe constitué des : nickel, palladium, iridium, étain, or et/ou leurs combinaisons.

10. Afficheur électrochromique (1) selon l'une des revendications 1 à 9, **caractérisé en ce que** le support (2) est constitué d'un matériau sélectionné dans le groupe constitué des :
feuille PET, feuille PE, polyimide ou fibre de verre.

11. Afficheur électrochromique (1) selon l'une des revendications 1 à 10, **caractérisé en ce que** l'électrolyte (4) comprend en outre, afin d'augmenter le contraste, un colorant contrastant avec la couleur de l'électrode (3).

12. Afficheur électrochromique (1) selon l'une des revendications 1 à 11, **caractérisé en ce que** l'électrolyte (4) comprend en outre un tensioactif afin d'en augmenter la mouillabilité.
